# EUROPÄISCHE PATENTSCHRIFT

(11) **EP 3 585 214 B1**
(45) Veröffentlichungstag und Bekanntmachung des Hinweises auf die Patenterteilung: **25.09.2024**
(21) Anmeldenummer: 18706263.3
(22) Anmeldetag: 20.02.2018
(51) Int. Cl.: A47F 1/12, G06Q 10/08, G07C 3/00

(54) **VORRICHTUNG ZUM VORSCHUB VON WAREN UND VERFAHREN ZUR ERFASSUNG EINES WARENBESTANDES**
DEVICE FOR FEEDING PRODUCTS AND METHOD FOR RECORDING A STOCK OF PRODUCTS
DISPOSITIF DESTINÉ À FAIRE AVANCER DES MARCHANDISES ET PROCÉDÉ DESTINÉ À DÉTECTER UN STOCK DE MARCHANDISES

(30) Priorität: 27.02.2017 DE 102017104041
(43) Veröffentlichungstag der Anmeldung: 01.01.2020
(73) Patentinhaber: neoalto GmbH, 50670 Köln (DE)
(72) Erfinder: BELLGARDT, Andreas, 33129 Delbrück (DE); VOSSHENRICH,Oliver, 32105 Bad Salzuflen (DE); VOSSHENRICH, Udo, 32105 Bad Salzuflen (DE)
(74) Vertreter: Dantz, Jan Henning
(86) Internationale Anmeldenummer: PCT/EP2018/054140
(87) Internationale Veröffentlichungsnummer: WO 2018/153852

(56) Entgegenhaltungen:
- EP-A1- 1 541 064
- US-A1- 2005 040 123
- US-A1- 2009 248 198
- US-A1- 2011 055 103
- US-A1- 2011 304 316

## Beschreibung

Die vorliegende Erfindung betrifft eine Vorrichtung zum Vorschub von Waren nach dem Oberbegriff des Anspruches 1 und ein Verfahren zur Erfassung eines Warenbestandes an einem Fach mit einer Vielzahl von Waren.

Die US 8,260,456 B2 offenbart eine Vorrichtung zum Vorschub von Waren, bei der an einem Warenfach ein Schieber vorgesehen ist, mittels dem die Waren zu einem Entnahmebereich förderbar sind. Der Schieber ist entlang einer Schiene geführt, und an einem zu dem Entnahmebereich gegenüberliegenden rückwärtigen Bereich ist ein Sensor vorgesehen, mittels dem die Position des Schiebers erfassbar ist. Durch die Erfassung der Position des Schiebers kann eine laufende Bestandsüberwachung durchgeführt werden. Allerdings ist nachteilig, dass der bauliche Aufwand zur Erfassung des Warenbestandes an den einzelnen Fächern hoch ist und zudem durch die laufende Bestandsüberwachung ein hoher Energiebedarf vorhanden ist, der einen Anschluss an ein Stromnetz erfordert.

Die US 2011/0304316 A1 offenbart eine Zuführvorrichtung mit einem entlang einer Leiterplatte bewegbaren Sensor zur Erfassung des Warenbestandes.

Die US 2014/0008382 A1 offenbart eine Vorrichtung zum Vorschub von Waren bei dem über ein Potentiometer die Position eines verfahrbaren Schiebers erfasst wird, um den Warenbestand zu ermitteln. Die Erfassungsmessung kann dabei durch einen Bewegungssensor ausgelöst werden.

Die US 2011/0055103 A1 offenbart eine Vorrichtung zum Vorschub von Waren, die eine optische Messvorrichtung zur Erfassung eines Warenbestandes aufweist, die fest an einer Rückwand eines Warenregals angeordnet ist.

Es ist daher Aufgabe der vorliegenden Erfindung, eine Vorrichtung zum Vorschub von Waren sowie ein Verfahren zur Erfassung eines Warenbestandes zu schaffen, die mit einfachen Mitteln eine Erfassung des Warenbestandes ermöglichen.

Diese Aufgabe wird mit einer Vorrichtung mit den Merkmalen des Anspruches 1 und einem Verfahren mit den Merkmalen des Anspruches 9 gelöst.

Erfindungsgemäß umfasst der durch eine Feder vorgespannte Schieber einen Bewegungssensor, mittels dem eine Bewegung des Schiebers detektierbar ist, um während oder nach einer Bewegung des Schiebers mindestens eine Messung zur Erfassung des Warenbestandes vorzunehmen. Dadurch kann der Warenbestand zuverlässig erfasst werden, wobei eine Messung nur durchgeführt wird, wenn der Schieber bewegt wird oder bewegt worden ist, so dass während des übrigen Zeitraums eine erfasste Menge an Waren nicht mehr über den Sensor zur Erfassung des Warenbestandes gemessen wird. Somit wird der Energieverbrauch deutlich reduziert, denn eine Messung zur Erfassung des Warenbestandes wird nur selten durchgeführt, und die hierfür notwendige Energie kann durch einen Stromspeicher, wie eine Batterie oder einen Akku, bereitgestellt werden, und eine aufwändige Verkabelung zur Stromversorgung ist nicht notwendig.

Erfindungsgemäß ist der Sensor zur Erfassung des Warenbestandes an dem Schieber angeordnet und mit diesem bewegbar. Der Sensor kann dabei an dem Schieber angeordnet oder an einem Halteteil oder Träger nachgerüstet werden. In jedem Fall bilden Sensor und Schieber eine Bewegungseinheit.

Der Sensor zur Erfassung des Warenbestandes umfasst erfindungsgemäß einen optischen Sensor, der eine Abstandsmessung durchführt. Durch Erfassung einer Position des Schiebers relativ zu einem festen Punkt, beispielsweise einer Rückwand, kann auf einfache Weise die Länge der hintereinander angeordneten Waren zwischen dem Entnahmebereich und dem Schieber berechnet werden, und abhängig von der Dicke der Ware auch die Anzahl der noch im Fach befindlichen Waren bestimmt werden.

An dem Schieber ist erfindungsgemäß eine Platine vorgesehen, die den Bewegungssensor und den Sensor zur Erfassung des Warenbestandes umfasst. Die Platine ist zusätzlich mit einer Auswerteelektronik vorgesehen, um die erfassten Daten weiterzuverarbeiten. Zudem kann an der Platine oder dem Schieber eine Kommunikationseinheit vorgesehen sein, mittels der die Messdaten zu einer Steuereinheit übertragbar sind, die beabstandet von dem Schieber angeordnet ist, beispielsweise kann die Steuereinheit in einem Einkaufszentrum oder einem anderen Ort vorgesehen werden, um über die Entnahme einer Ware informiert zu werden.

Vorzugsweise ist eine Eingabeeinheit vorgesehen, um den Schieber und den Sensor zur Erfassung des Warenbestandes einem bestimmten Fach zuzuordnen, wobei mittels einer Identifizierung des Schiebers eine Identifizierung der entnommenen Ware möglich ist. Hierfür kann jeder Platine mit einer Auswerteelektronik eine bestimmte Identifikation zugeordnet werden, die einem Fach und/oder einer Ware zugeordnet wird.

In einer weiteren Ausgestaltung ist ein Temperatursensor vorgesehen, der die Temperatur der Vorrichtung an die Auswerteelektronik und/oder eine Steuereinheit überträgt. Der Temperatursensor dient zum Abgleich von Drifterscheinungen der Sensorik und kann somit Temperatureinflüsse auf die Messung kompensieren, beispielsweise wenn die Vorrichtung in einem Kühlbereich oder an einer Theke mit warmen Lebensmitteln eingesetzt wird.

Der Schieber bei der erfindungsgemäßen Vorrichtung kann wahlweise als ein Träger für einen Bewegungssensor und einen Sensor zur Erfassung des Warenbestandes dienen, aber auch eine Vorschubeinrichtung zum Verschieben der Waren zu einem Entnahmebereich ausbilden. Wenn ein Träger für die Sensoren eingesetzt wird, kann die entsprechende Sensorik auf einfache Weise bei bestehenden Schiebern nachgerüstet werden. Der Träger kann dabei unterschiedliche Gehäuseformen aufweisen. Beispielsweise kann zu Erhöhung der Messgenauigkeit der Sensor zur Erfassung des Warenbestandes benachbart zu einer Führungseinrichtung für den Schieber positioniert werden. Ein Sichtfenster für den Sensor zur Erfassung des Warenbestandes kann beispielsweise weniger als 6cm, insbesondere weniger als 4cm beabstandet von einer Führung für den Schieber angeordnet sein. Optional kann eine Stromversorgung, die vergleichsweise viel Bauraum benötigt, an einer Vorderseite des Schiebers positioniert werden, beispielsweise durch eine auf den Schieber aufsteckbare Haube. Dadurch kann ein Spalt zu einen Anschlag für Waren an der Vorderseite des Schiebers verkleinert werden, was ebenfalls die Messgenauigkeit erhöht. Alternativ kann die Stromversorgung auch auf dem Schieber an einer Rückseite positioniert werden.

Bei dem erfindungsgemäßen Verfahren wird zunächst eine Ware an einem Entnahmebereich entnommen, um die übrigen in einem Fach angeordneten Waren zu verschieben. Diese Schiebebewegung kann mittels eines durch eine Feder vorgespannten Schiebers mit einem Bewegungssensor erfasst werden, um eine Messung zur Erfassung des Warenbestandes durch das Signal des Bewegungssensors auszulösen. Eine Erfassung des Warenbestandes erfolgt dann vorzugsweise nach einer Bewegung des Schiebers und nicht fortlaufend, wenn dieser im Ruhezustand stationär angeordnet ist, um die Dauer und Anzahl der Messungen auf ein Minimum zu reduzieren.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht einer erfindungsgemäßen Vorrichtung zum Vorschub von Waren;
- Figur 2: eine Seitenansicht der Vorrichtung der Figur 1 bei einer Messung;
- Figur 3: eine perspektivische Detailansicht eines Schiebers der Vorrichtung der Figur 2;
- Figur 4: eine perspektivische Explosionsdarstellung eines Gehäuses mit einer Sensorik für den Schieber der Figur 3;
- Figur 5: eine Seitenansicht einer modifizierten Vorrichtung zum Vorschub von Waren;
- Figur 6: ein weiteres Ausführungsbeispiel einer Vorrichtung zum Vorschub von Waren;
- Figur 7: eine Seitenansicht einer modifizierten Vorrichtung zum Vorschub von Waren, und
- Figuren 8A und 8B: zwei Ansichten der Messeinrichtung der Figur 7.
- Figur 9A und 9B: zwei Ansichten eines weiteren Ausführungsbeispiels eines Schiebers mit einer Messeinrichtung; und
- Figur 10: eine perspektivische Explosionsdarstellung eines weiteren Ausführungsbeispiels eines Schiebers mit einer Messeinrichtung.

Eine Vorrichtung 1 zum Vorschub von Waren umfasst ein oder mehrere Fächer 2, die durch Fachteiler 3 oder andere Wände unterteilt sind. Jedem Fach 2 ist ein Schieber 4 zugeordnet, der durch eine Feder 5 zu einem Entnahmebereich eines Faches 2 vorgespannt ist. Hierfür ist der Schieber 4 entlang eines Profils 9 verschiebbar geführt, wobei auf das Profil 9 optional auch verzichtet werden kann.

An einem vorderen Entnahmebereich ist eine Adapterschiene 8 vorgesehen, an der ein Anschlag 6 und eine Frontplatte 7 vorgesehen sind, die einen Anschlag für die vorderste Ware an einem Fach 2 ausbilden.

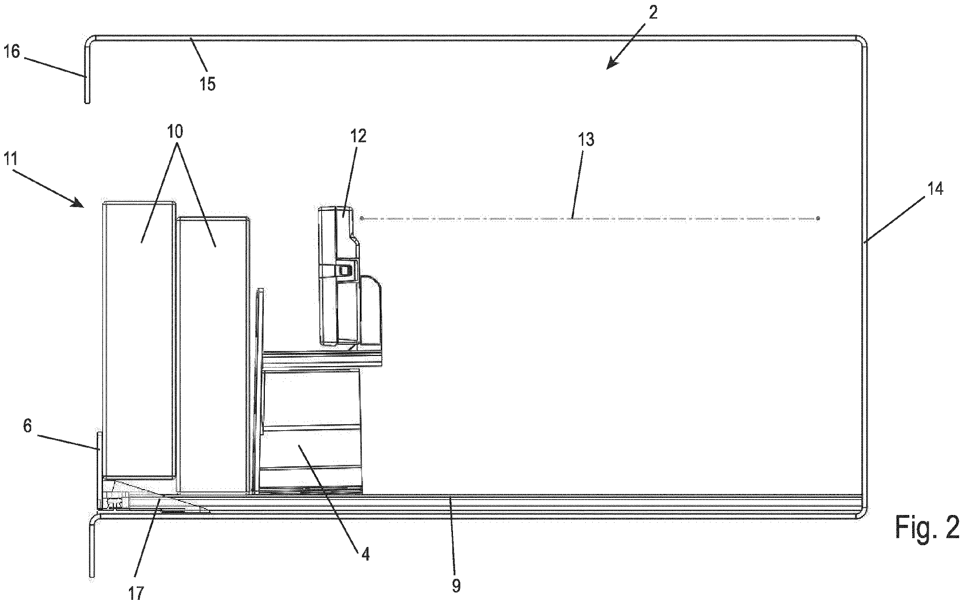

In Figur 2 ist das Fach 2 in einer Seitenansicht gezeigt, bei dem zwei Waren 10 in einer quaderförmigen Verpackung angeordnet sind, die zwischen dem Anschlag 6 und dem Schieber 4 vorgesehen sind. Wird die vorderste Ware 10 an einem Entnahmebereich 11 entnommen, bewegt der durch die Feder 5 vorgespannte Schieber 4 die noch verbliebene Ware 10 gegen den Anschlag 6 unter Nutzung einer ansteigenden Rampe 17 vor dem Anschlag 6.Der Schieber 4 umfasst dabei ein unteres Schieberteil, das an dem Profil 9 geführt ist, und einen oberen Schieber 12, der durch den unteren Schieber 4 getragen und mit diesem bewegt wird. Der obere Schieber 12 kann auch an schon bestehenden Schiebern 4 nachgerüstet werden. An dem oberen Schieber 12 ist ein Sensor zur Erfassung des Warenbestandes vorgesehen, der einen optischen Sensor umfasst, der zur Rückseite hin einen Wellenstrahl 13 aussendet, der der von einer Rückwand 14 oder einem anderen Bauteil reflektiert wird. Durch Messung der Zeit, bis wann der reflektierte Strahl wieder an dem optischen Sensor eintrifft, kann die Position des Schiebers 4 gemessen werden und somit die Anzahl der Waren 10 bestimmt werden, die in dem Fach 2 vorrätig sind. Ein solcher Sensor ist beispielsweise in der DE 20 2016 105 648 beschrieben, auf die Bezug genommen wird.

An dem Fach 2 kann ferner eine Deckenwand 15 oder die Unterseite eines benachbarten Regalbodens vorgesehen sein, und an einer Vorderseite ein Steg 16, der den Entnahmebereich 11 nach oben begrenzt. Dadurch wird der Zugriffsbereich an dem Entnahmebereich 11 verkleinert, was die gleichzeitige Entnahme einer Vielzahl von Waren 10 erschwert.

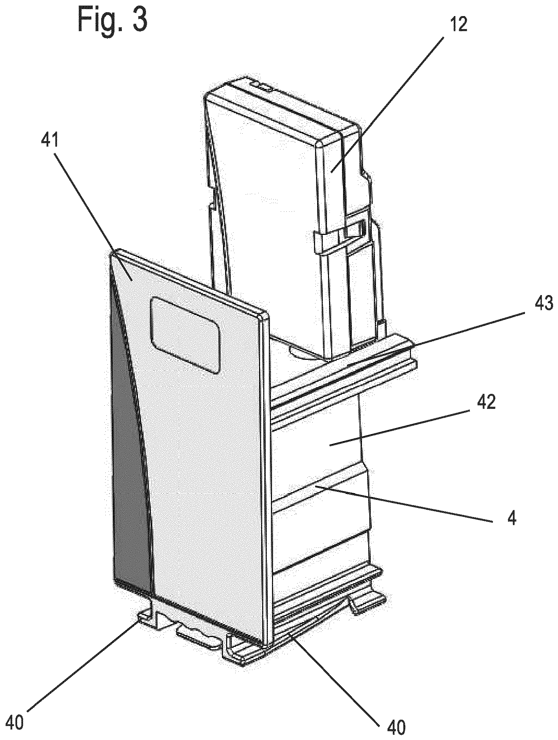

In Figur 3 ist der Schieber 4 im Detail dargestellt. Der Schieber 4 umfasst am unteren Bereich stegförmige Führungselemente 40, die mit entsprechenden Führungsstegen an dem Profil 9 zusammenwirken. Ferner umfasst der Schieber 4 eine Vorschubplatte 41, die an der Rückseite der hintersten Ware 10 anliegt. An einem kastenförmigen Gehäuse 42 ist eine Feder angeordnet, insbesondere eine aufwickelbare Bandfeder, die den Schieber 4 in Vorschubrichtung spannt. An dem Gehäuse 42 sind ferner Schienenabschnitte 43 vorgesehen, an denen der obere Schieber 12 fixiert ist, der die Sensorik beinhaltet.

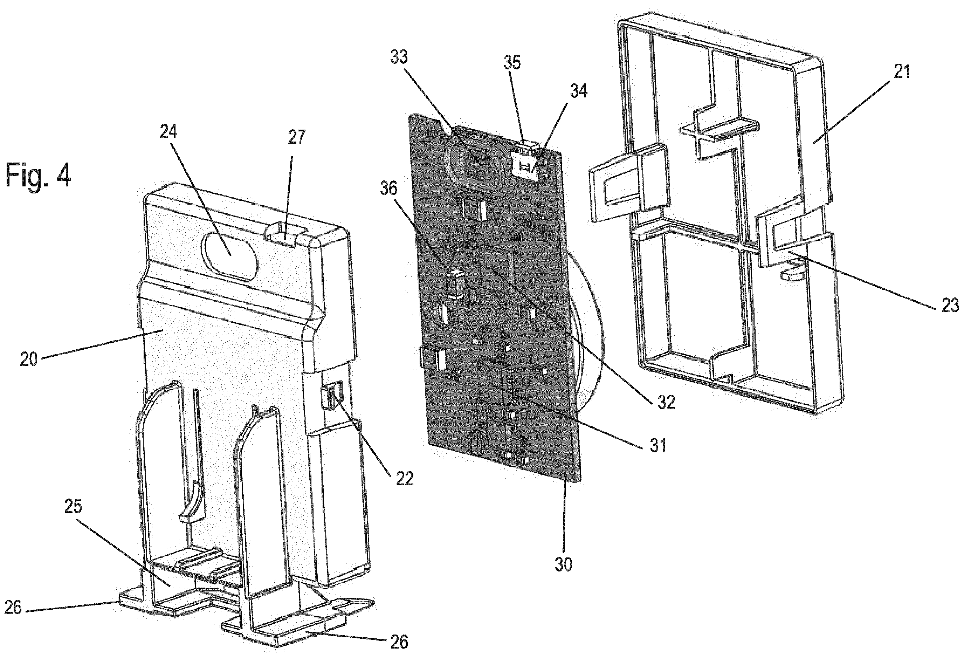

Der obere Schieber 12 ist in Figur 4 im Detail dargestellt. In einem kastenförmigen Gehäuse mit einem ersten Gehäuseteil 20 und einem zweiten Gehäuseteil 21 ist eine Platine 30 angeordnet. Das erste Gehäuseteil 20 umfasst im unteren Bereich Führungsstege 26 an Fußelementen 25, die an den Schienenabschnitten 43 festlegbar sind. Alternativ können die Führungsstege 26 auch unmittelbar an dem Profil 9 geführt werden. Die Gehäuseteile 20 und 21 sind aneinander verrastbar, wobei hierfür entsprechende Rastvorsprünge 22 und Raststege 23 vorgesehen sind, die beim Aufeinanderstecken der Gehäuseteile 20 und 21 die Platine 30 vor Umgebungseinflüssen schützen.

Die Platine 30 umfasst eine Auswerteelektronik 31, die mit einem Sensor 32 zur Bestandserfassung verbunden ist. Der Sensor 32 zur Bestandserfassung umfasst einen optischen Sensor 33, der elektromagnetische Wellen über einen optischen Sensor 33 aussenden kann, die durch ein Sichtfenster oder eine Aussparung 24 an dem Gehäuseteil 20 ausgesendet werden können. Ferner kann der optische Sensor 33 eine Reflektion erfassen, um die Position des oberen Schiebers 12 in dem Fach 2 zu bestimmen. An der Platine 30 ist ferner ein Bewegungssensor 36 vorgesehen, der eine Bewegung des Schiebers 12 detektiert. Über den Bewegungssensor 36 kann eine Messung des Sensors 32 zur Erfassung des Warenbestandes ausgelöst werden. Dadurch wird sichergestellt, dass eine Messung nur nach einer Bewegung des oberen Schiebers 12 stattfindet, aber nicht fortlaufend, wenn dieser stationär in einer Position verbleibt. An der Platine 30 können ferner Mittel zur Stromversorgung, insbesondere Batterien oder Akkus, vorgesehen sein, die eine Verkabelung zur Stromversorgung unnötig machen.

An der Platine 30 ist ferner eine Eingabeeinheit 34 mit einem Taster 35 vorgesehen, um den oberen Schieber 12 einem bestimmten Fach 2 und somit bestimmten Waren 10 zuzuordnen. Über die Eingabeeinheit 34 kann dem oberen Schieber 12 eine Identifizierung zugeordnet werden, die dann eine Zuordnung zu den Waren 10 ermöglicht.

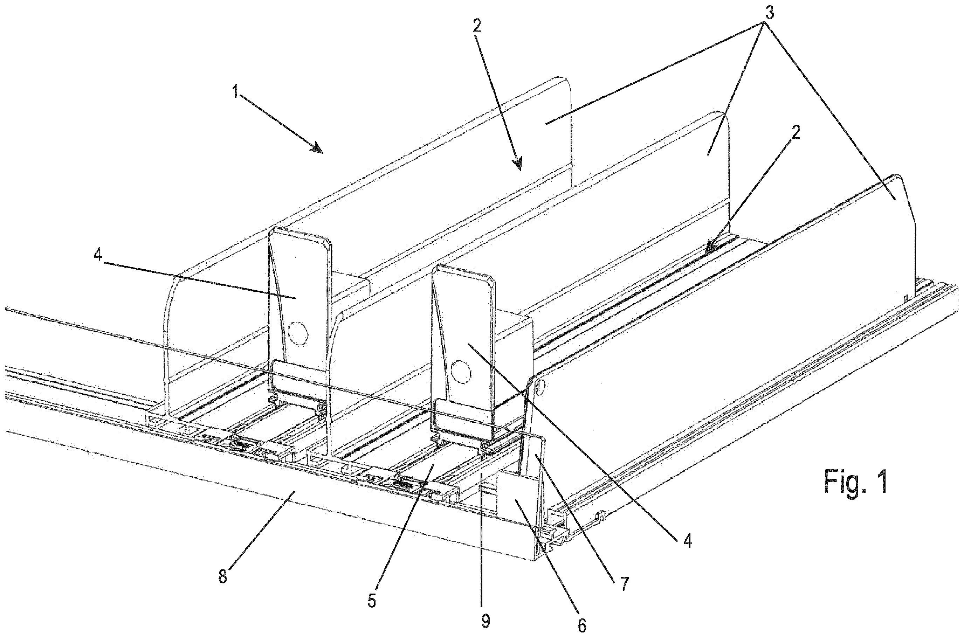

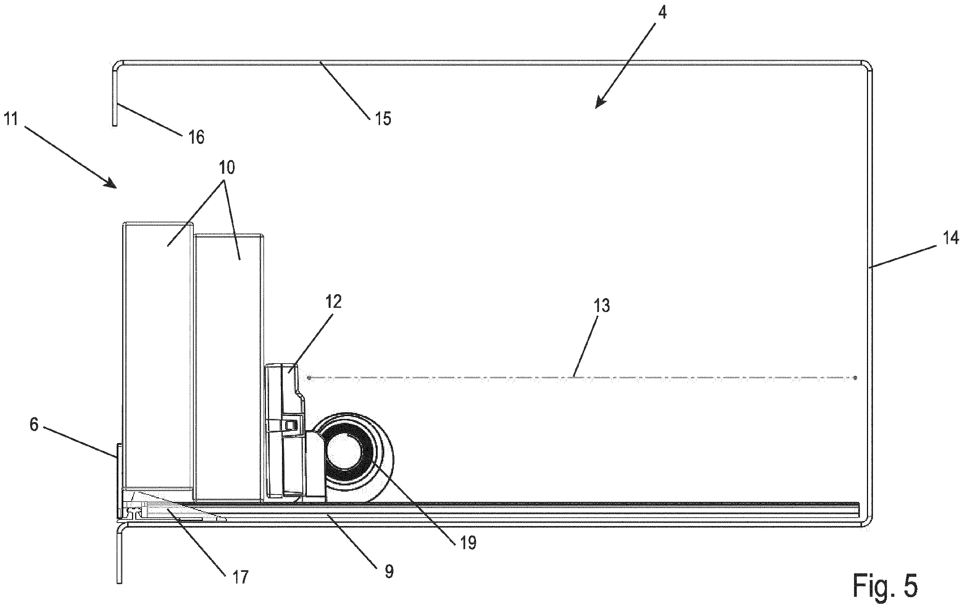

In Figur 5 ist eine modifizierte Ausführungsform einer Vorrichtung gezeigt, bei der die Waren ähnlich zu Figur 2 zu einem Entnahmebereich 11 in einem Fach 2 (Figur 1 und 2) gefördert werden, wobei nur der Schieber 12 vorgesehen ist, der nun nicht mehr als Träger für die Sensoren oben auf dem Schieber 4 angeordnet ist, sondern der Schieber 4, der in den Figuren 3 und 4 als Träger für den oberen Schieber 12 dient, weggelassen wurde. Somit kann der obere Schieber 12, der bei dem vorangegangenen Ausführungsbeispiel nur ein Bestandteil des gesamten Schiebers war, auch selbst den Schieber für die Förderung der Waren 10 ausbilden. Der Schieber 12 ist wie bei dem vorangegangenen Ausführungsbeispiel durch eine schematisch dargestellte Feder 19 in Vorschubrichtung vorgespannt, wobei hierfür auch noch Halteeinrichtungen für die Feder 19 vorgesehen sein können.

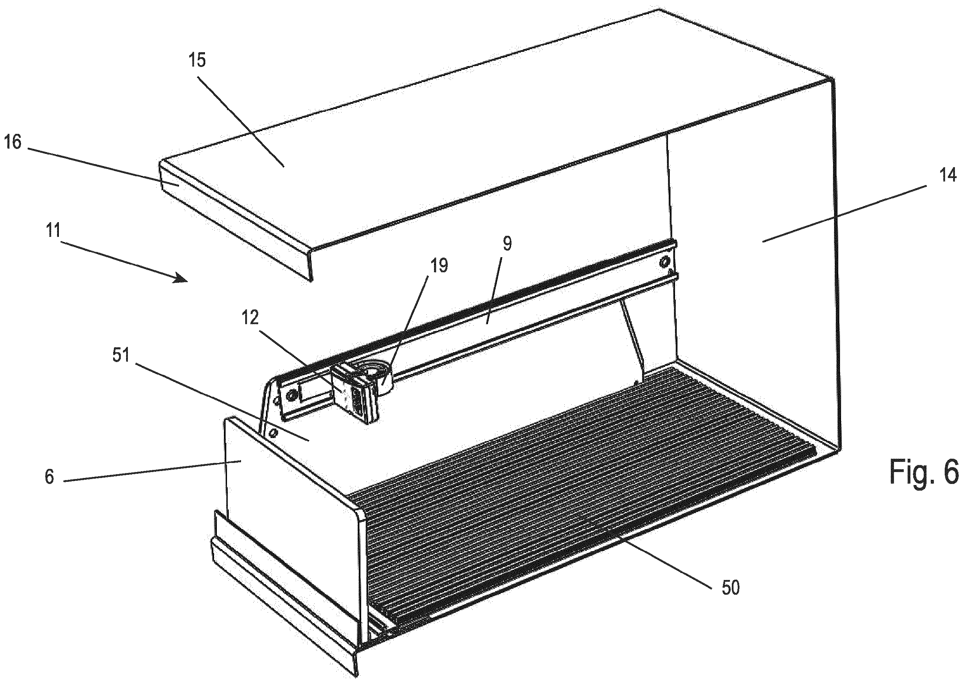

In Figur 6 ist eine weitere Ausführungsform einer erfindungsgemäßen Vorrichtung gezeigt, bei der Waren zu einem Entnahmebereich 11 gefördert werden können, der oberhalb eines Anschlages 6 angeordnet ist. Bei diesem Ausführungsbeispiel werden die Waren allerdings nicht über einen Schieber gefördert, sondern sind auf einer Auflage- oder Gleitfläche 50 vorgesehen, die wahlweise horizontal oder geneigt angeordnet sein kann. Bei einer geneigten Anordnung können die Waren durch die Schwerkraft selbstständig zu dem Anschlag 6 verschoben werden, wenn die vorderste Ware entnommen wird. Bei diesem Ausführungsbeispiel ist ein Schieber 12 vorgesehen, der entlang eines Profils 9 verfahrbar ist, wobei das Profil 9 an einer Seitenwand 51 vorgesehen ist. Der Schieber 12 liegt an der Rückseite der hintersten Waren an und kann über die Feder 19 wahlweise Federkräfte zum Fördern der Waren in Vorschubrichtung generieren oder nur geringe Kräfte, die für eine Anlage des Schiebers 12 an der hintersten Ware sorgen, ohne die Waren in Vorschubrichtung zu fördern. Optional kann bei dem Ausführungsbeispiel der Figur 6 ein weiterer Schieber vorgesehen sein, der die Waren in Vorschubrichtung fördert, so dass ein erster Schieber 12 für die Vorschubbewegung und ein zweiter Schieber 12 für die Erfassung des Warenbestandes vorgesehen wird.

Bei einem Verfahren zur Erfassung des Warenbestandes wird zunächst die vorderste Ware 10 an dem Entnahmebereich 11 entnommen. Dann werden die übrigen Waren 10 durch den Schieber 4 oder die Schwerkraft oder durch andere Einrichtungen zur Förderung der Waren bewegt, was über einen Schieber detektiert wird, der über eine Feder 19 oder 5 zu den Waren 10 hin vorgespannt ist, wobei der Schieber einen entsprechenden Bewegungssensor 36 aufweist. Der Bewegungssensor 36 detektiert eine Bewegung des Schiebers 12 und kann somit einen Messvorgang einleiten, um die Position des Schiebers 12 zu erfassen, so dass detektiert werden kann, wie viele Waren aus dem Fach 2 entnommen wurden. Sobald der Schieber 12 nicht mehr bewegt wird und stationär angeordnet verbleibt, wird der Messvorgang beendet, bis der Schieber 12 erneut bewegt wird. Optional kann während der Bewegung des Schiebers 12 auch nur in bestimmten Intervallen ein Messvorgang durchgeführt werden, um den Energieverbrauch für die Erfassung des Warenbestandes auf ein Minimum zu reduzieren.

An der Platine 30 des Schiebers 12 kann optional ein Temperatursensor vorgesehen sein, um Temperatureinflüsse auf die Messergebnisse zu reduzieren. Mittels einer Kommunikationseinheit können die erfassten Daten drahtlos an eine Steuereinheit übermittelt werden, beispielsweise mittels Bluetooth ^{™} Low Energy.

Der Bewegungssensor kann beispielsweise als Beschleunigungssensor ausgebildet sein, der bei einer Beschleunigung jeweils eine Messung zur Erfassung des Warenbestandes auslöst. Dann wird der Schieber 12 zu Beginn einer Vorschubbewegung beschleunigt, was eine erste Messung durch den Beschleunigungssensor auslöst. Wenn der Schieber 12 wieder abgebremst wird, weil die vorderste Ware an dem Anschlag 6 anliegt, wird dies durch den Beschleunigungssensor erneut erfasst, was eine weitere Messung auslöst, so dass mit nur zwei Messungen zuverlässig der Warenbestand an dem jeweiligen Fach 2 erfasst werden kann.

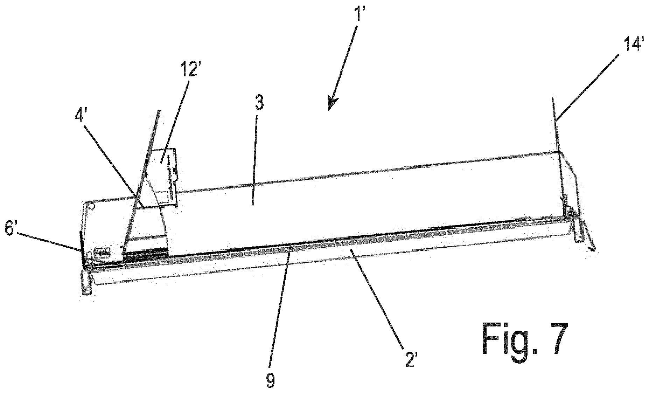

In Figur 7 ist eine Vorrichtung 1' zum Vorschub von Waren gezeigt, bei der auf einer zur Horizontalen geneigten Ablage 2' ein Schieber 4' zum Vorschub von Waren verfahrbar ist, optional auf einem auf der Ablage 2' angeordneten Profil. Der Schieber 4' schiebt die Waren zu einem frontseitigen Anschlag 6' und trägt eine Messeinrichtung 12', die zur Erfassung des Warenbestandes vorgesehen ist. Benachbarte Fächer der Vorrichtung 1' sind durch Fachteiler 3 voneinander getrennt. Die Messeinrichtung 12' umfasst einen Bewegungssensor, der eine Bewegung des Schiebers 4' erfasst und dadurch eine Steuerung anschaltet, um über einen weiteren Sensor eine Erfassung des Warenbestandes vorzunehmen. Dieser weitere Sensor ist vorzugsweise ein optischer Sensor zur Abstandsmessung, der beispielsweise mit einer Rückwand 14' eines Regals oder eines Warenaufnahme zusammenwirken kann, um eine Positionsbestimmung zur Erfassung des Warenbestandes durchzuführen. Die Neigung der Ablage 2' kann je nach Regal in einem Bereich zwischen 0° und 45°, vorzugsweise 5° bis 30°, vorgesehen werden.

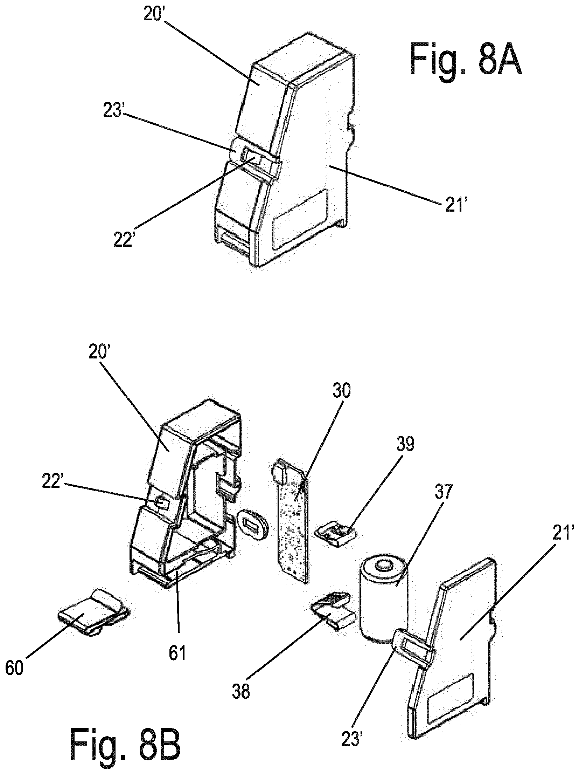

In den Figuren 8A und 8B ist die Messeinrichtung 12' im Detail gezeigt. Die Messeinrichtung 12' umfasst ein getrennt von dem Schieber 4A ausgebildetes Gehäuse mit einem ersten Gehäuseteil 20', das topfförmig ausgebildet ist und über ein seitliches zweites Gehäuseteil 21' verschließbar ist. Der Messeinrichtung 12' weist eine Vorderseite auf, die an einer Rückseite einer Platte des Schiebers 4' anliegt, wobei eine Vorderseite und eine Rückseite des Gehäuses der Messeinrichtung 12' nicht parallel sondern geneigt zueinander ausgerichtet sind. Dadurch kann eine Platte des Schiebers 4' im Wesentlichen Vertikal ausgerichtet bleiben, auch wenn die Ablage 2'geneigt zur Horizontalen ausgerichtet sind. Optional kann auch die die Messrichtung des optischen Sensors zur Erfassung des Warenbestandes statt horizonatal geneigt zur Horizontalen verlaufen.

An dem Gehäuse mit dem Gehäuseteilen 20' und 21' ist eine Klammer 60 vorgesehen, die zur lösbaren Fixierung der Messeinrichtung 12' an dem Schieber 4' dient. Hierfür kann die Klammer 60 eine erste Aufnahme, die auf einen Steg 61 an dem Gehäusteil 20' aufgesteckt ist, und eine zweite Aufnahme aufweisen, die auf einen Steg an dem Schieber 4 gesteckt wird, so dass die Messeinrichtung 12' klemmend an dem Schieber 4 fixiert ist. Dadurch kann die Messeinrichtung 12' auch bei bestehenden Warenvorschüben an den Schiebern 4 oder 4' leicht nachgerüstet werden. Optional kann der Schieber 4' auch ein Gehäuse zur Aufnahme der Messeinrichtung 12' ausbilden, so dass keine mechanische Befestigung notwendig ist.

Die Gehäuseteile 20' und 21' sind durch eine vertikale Trennebene unterteilt, die sich parallel zur Vorschubrichtung erstreckt. Das zweite Gehäuseteil 21' umfasst dabei bügelförmige Raststege 23', die an Rastvorsprüngen 22' verrastbar sind. In dem topfförmigen Gehäuseteil 20' ist eine Platine 30 vorgesehen, die Sensoren zur Erfassung des Warenbstandes aufweisen, wie dies bei den vorangegangenen Ausführungsbeispielen schon erläutert wurde.

In dem Gehäuseteil 20' ist ferner eine Stromversorgung in Form einer Batterie 37 untergebracht, die über Kontakte 38 und 39 eine Energieversorgung für die Sensoren auf der Platine 30 bereitstellt. Die Batterie 37 kann als Knopfzelle, in Zylinderform oder in anderen Formen vorgesehen werden.

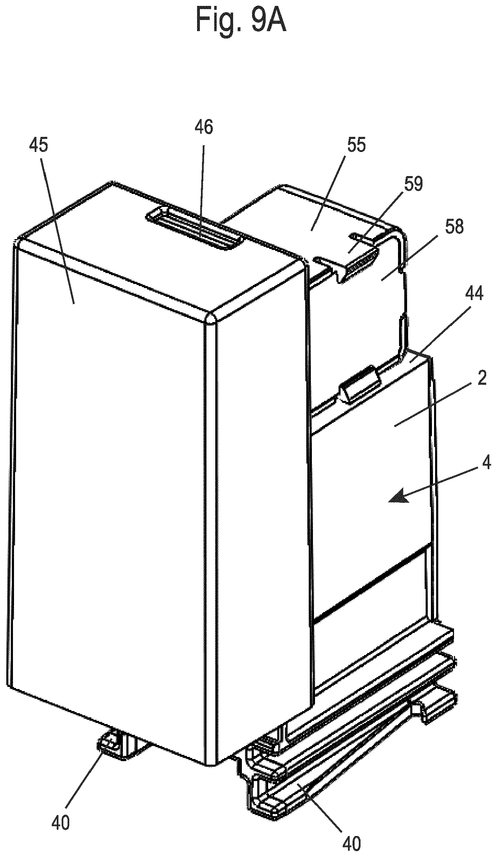

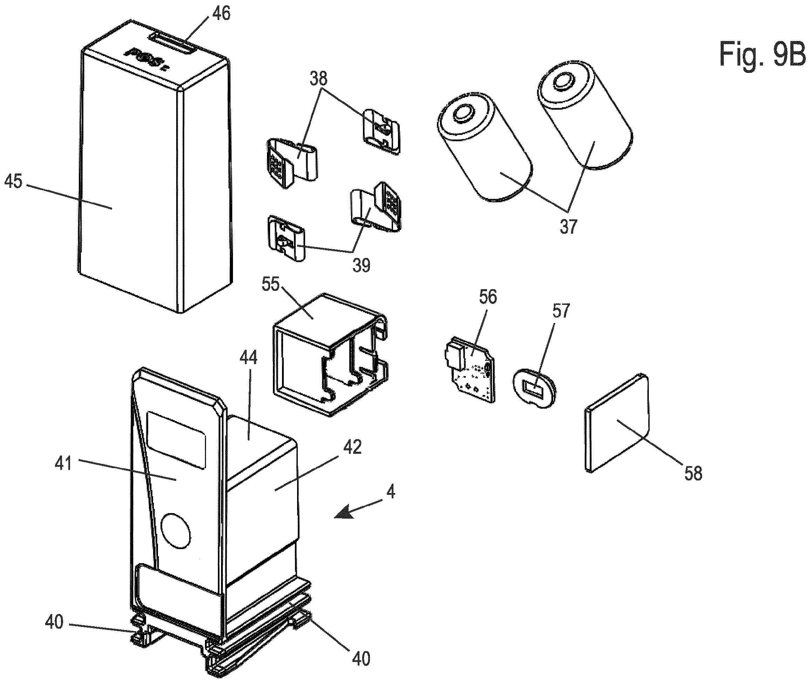

In Figur 9A und 9B ist der oben beschriebene Schieber 4 mit einer modifizierten Messeinrichtung versehen. An einer Vorschubplatte 41 ist eine Haube 45 vorgesehen, die von oben aufsteckbar ist und über Rastmittel 46 an der Vorschubplatte 41 fixierbar ist. Die Haube 45 umgreift die Vorschubplatte 41 und kann innen Führungsmittel für die Aufsteckbewegung aufweisen. In der Haube 45 sind zwei Batterien 37 vorgesehen, die durch Kontakte 38 und 39 kontaktiert sind und zur Stromversorung von Sensoren auf einer Platine 56 dienen. Die Platine 56 ist dabei nicht in der Haube 45 sondern in einem Halter 55 auf einer Rückseite der Vorschubplatte 41 auf einer Oberseite 44 des kastenförmigen Gehäuses 42 angeordnet. Hierfür ist die Platine 56 mit den Sensoren in den Halter 55 eingesteckt, der durch eine über Raststege 59 des Halters fixierbare Abdeckung 58 verschließbar ist. Die Sensoren auf der Platine können für eine Abstandsmessung zu einer Rückwand durch ein Fenster 57 an dem Halter 55 eine Strahlung emittieren. Alternativ ist es möglich, dass eine optische Abstandsmessung zur Erfassung des Warenbestandes durch einen Sensor an oder in der Haube 45 zu einem Fixpunkt an einer Vorderseite hin ausgeführt wird.

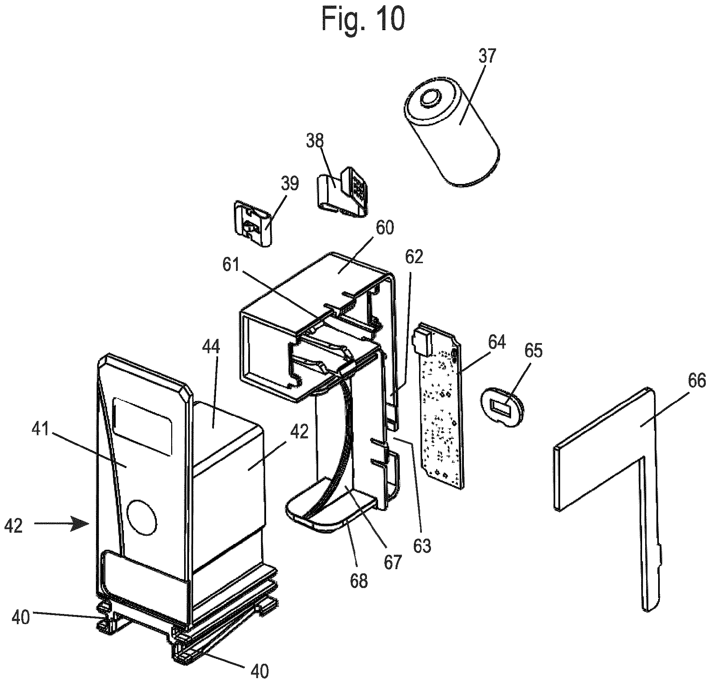

In der Figur 10 ist ein weiteres Ausführungsbeispiel gezeigt, bei dem auf dem Schieber 4 eine modifizierte Messeinrichtung vorgesehen ist. Die Messeinrichtung umfasst ein winkelförmiges Gehäuse 60 mit einer Aufnahme 61 für eine Batterie 37, die auf der Oberseite 44 des Gehäuses 42 des Schiebers 4 angeordnet ist. Eine zweite Aufnahme 62 ist an einer Rückseite des Gehäuses 42 teilweise unterhalb der Oberseite 44 angeordnet und dient zur Aufnahme einer Platine 64, auf der Sensoren zur Erfassung des Warenbstandes vorgesehen sind. Ein Sichtfenster 65 für den Abstandssensor ist dabei an einer rückseitigen Öffnung der Aufnahme 62 angeordnet, wobei das Sichtfenster unterhalb der Oberseite 44 des Gehäuses 42 angeordnet ist. Dadurch kann der Sensor zur Erfassung des Warenbestandes besonders tief positioniert werden, was die Messgenauigkeit erhöht. Vorzugsweise ist das Sichtfenster 65 für den Sensor niedriger als 4cm oberhalb einer Führung des Profils 9 für die Führungselemente 40 angeordnet. Die Aufnahmen 61 und 62 sind über eine Abdeckung 66 verschließbar. Ferner befindet sich im unteren Bereich der Aufnahme 62 ein nach vorne ragender Steg 68, der in eine Tasche an einer Rückseite des Gehäuses 42 einfügbar ist. Der Steg 68 ist dabei über eine bogenförmige Verstärkungsrippe 67 gehalten, die einen Teil einer Wicklung einer Feder 19 in dem Gehäuse 42 umgibt.

Bei allen Ausführungsbeispielen kann ein Eingabeelement oder Taster zum Kalbrieren der Messeinrichtung 12' vorgesehen sein. Mit dem Eingabeelement kann ein Messvorgang ohne Bewegung des Schiebers 4 oder 4' ausgelöst werden, beispielsweise zur Definion einer Endstellung des Schiebers 4 oder 4' an einem vorderen Anschlag 6 oder 6' des Warenvorschubes.

Ferner können die Ausführungsbeispiele hinsichtlich der Gehäuseformen, der Stromversorgung und der Anordnung der Messeinrichtung miteinander kombiniert werden.

### Bezugszeichenliste

- 1, 1': Vorrichtung
- 2: Fach
- 2': Ablage
- 3: Fachteiler
- 4, 4': Schieber
- 5: Feder
- 6, 6': Anschlag
- 7: Frontplatte
- 8: Adapterschiene
- 9: Profil
- 10: Ware
- 11: Entnahmebereich
- 12: oberer Schieber
- 12': Messeinrichtung
- 13: Wellenstrahl
- 14, 14': Rückwand
- 15: Deckenwand
- 16: Steg
- 17: Rampe
- 19: Feder
- 20, 20': Gehäuseteil
- 21, 21': Gehäuseteil
- 22, 22': Rastvorsprung
- 23, 23': Raststeg
- 24: Aussparung
- 25: Fußelement
- 26: Führungssteg
- 30: Platine
- 31: Auswerteelektronik
- 32: Sensor
- 33: Sensor
- 34: Eingabeeinheit
- 35: Taster
- 36: Bewegungssensor
- 37: Batterie
- 38: Kontakt
- 39: Kontakt
- 40: Führungselement
- 41: Vorschubplatte
- 42: Gehäuse
- 43: Schienenabschnitt
- 44: Oberseite
- 45: Haube
- 46: Rastmittel
- 50: Gleitfläche
- 51: Seitenwand
- 55: Halter
- 56: Platine
- 57: Fenster
- 58: Abdeckung
- 59: Raststege
- 60: Gehäuse
- 61: Aufnahme
- 62: Aufnahme
- 63: Öffnung
- 64: Platine
- 65: Sichtfenster
- 66: Abdeckung
- 67: Verstärkungsrippe
- 68: Steg

## Patentansprüche

1. Vorrichtung (1) zum Vorschub von Waren (10), mit einem Fach (2) zur Bevorratung mehrerer Waren (10), an dem an einem Entnahmebereich (11) eine oder mehrere Waren (10) entnehmbar sind, und auf der zum Entnahmebereich (11) gegenüberliegenden Seite ein durch eine Feder vorgespannter Schieber (4, 12) an einer der Waren (10) anliegt, und bei Entnahme einer Ware (10) in Vorschubrichtung bewegt wird, wobei ein Sensor zur Erfassung des Warenbestandes vorgesehen ist, wobei der Sensor zur Erfassung des Warenbestandes an dem Schieber (4, 12) angeordnet und mit diesem bewegbar ist und an dem Schieber (4, 12) ein Bewegungssensor (36) angeordnet ist, mittels dem eine Bewegung des Schiebers (4, 12) detektierbar ist, um bei einer Bewegung des Schiebers (4, 12) mindestens eine Messung zur Erfassung des Warenbestandes vorzunehmen, wobei an dem Schieber (12, 12') eine Platine (30, 56, 64) vorgesehen ist, die den Bewegungssensor (36) und den Sensor zur Erfassung des Warenbestandes umfasst, **dadurch gekennzeichnet, dass** auf der Platine (30, 56, 64) eine Auswerteelektronik (31) vorgesehen ist, die mit dem Sensor zur Erfassung des Warenbestandes verbunden ist, und dass der Sensor zur Erfassung des Warenbestandes einen optischen Sensor (33) umfasst, der elektromagnetische Wellen aussenden und eine Reflektion erfassen kann, wobei der optische Sensor einen Wellenstrahl (13) aussendet, der von einer Rückwand (14) oder einem anderen Bauteil reflektiert wird, und dass der optische Sensor eine Abstandsmessung durchführt, wobei die Erfassung einer Position des Schiebers (4, 12) relativ zu einem festen Punkt, beispielsweise der Rückwand (14), durch Messung der Zeit, bis wann der reflektierte Strahl (13) wieder an dem optischen Sensor (33) eintrifft, erfolgt und die Länge der hintereinander angeordneten Waren (10) zwischen dem Entnahmebereich (11) und dem Schieber (4, 12) berechnet wird, und abhängig von der Dicke der Ware auch die Anzahl der noch im Fach (2) befindlichen Waren bestimmt werden.

2. Vorrichtung nach Anspruch 1, **dadurch gekennzeichnet, dass** die Erfassung einer Position des Schiebers (4, 12) relativ zu der Rückwand erfolgt.

3. Vorrichtung nach Anspruch 1 oder 2, **dadurch gekennzeichnet, dass** die Platine (30, 56, 64) an oder in einem Halter (55) oder Gehäuse (20, 21; 20', 21', 60) angeordnet ist, das lösbar an dem Schieber (4) fixiert ist.

4. Vorrichtung nach einem der vorhergehenden Ansprüche, **dadurch gekennzeichnet, dass** an dem Schieber (12, 12') eine Kommunikationseinheit vorgesehen ist, mittels der die Messdaten zu einer Steuereinheit übertragbar sind.

5. Vorrichtung nach einem der vorhergehenden Ansprüche, **dadurch gekennzeichnet, dass** eine Eingabeeinheit (34) vorgesehen ist, um den Schieber (12, 12') und den Sensor zur Erfassung des Warenbestandes einem bestimmten Fach (2) zuzuordnen, und mittels einer Identifizierung des Schiebers (12, 12') eine Identifizierung der entnommenen Ware (10) möglich ist.

6. Vorrichtung nach einem der vorhergehenden Ansprüche, **dadurch gekennzeichnet, dass** ein Temperatursensor vorgesehen ist, der die Temperatur an der Vorrichtung zu der Auswerteelektronik (31) und/oder einer Steuereinheit überträgt.

7. Vorrichtung nach einem der vorhergehenden Ansprüche, **dadurch gekennzeichnet, dass** der Schieber (4, 12, 12') als Vorschubeinrichtung zum Vorschub der Waren (10) zu dem Entnahmebereich (11) ausgebildet ist.

8. Vorrichtung nach einem der vorhergehenden Ansprüche, **dadurch gekennzeichnet, dass** an oder in dem Schieber (12') eine Stromversorgung (37) vorgesehen ist.

9. Verfahren zur Erfassung eines Warenbestandes an einem Fach (2) mit einer Vielzahl von Waren (10) nach der Vorrichtung nach Anspruch 1, mit den folgenden Schritten:
- Entnahme einer Ware (10) an einem Entnahmebereich (11);
- Verschieben der übrigen in dem Fach (2) verbliebenen Waren (10);
- Erfassen der Schiebebewegung mittels eines durch eine Feder vorgespannten Schiebers (4, 12, 12') mit einem an dem Schieber (4, 12) angeordneten Bewegungssensor (36);
- Auslösen, durch das Signal des Bewegungssensors (36) nach Detektion der Bewegung des Schiebers, einer Messung eines Sensors , der auf dem Schieber (4, 12) angeordnet ist und mit diesem bewegbar ist, der einen optischen Sensor (33) umfasst, der einen Wellenstrahl (13) aussendet, der von einer Rückwand (14) oder einem anderen Bauteil reflektiert wird, zur Erfassung des Warenbestands;
- wobei die Erfassung einer Position des Schiebers (4, 12) relativ zu einem festen Punkt, beispielsweise einer Rückwand, durch Messung der Zeit, bis wann der reflektierte Strahl (13) wieder an dem optischen Sensor (33) eintrifft, erfolgt und die Länge der hintereinander angeordneten Waren zwischen dem Entnahmebereich und dem Schieber berechnet wird, und abhängig von der Dicke der Ware auch die Anzahl der noch im Fach befindlichen Waren bestimmt werden.

10. Verfahren nach Anspruch 9, **dadurch gekennzeichnet, dass** die Messung zur Erfassung des Warenbestandes nach einer Bewegung des Schiebers (4, 12, 12') erfolgt, wenn dieser wieder still steht.

## Claims

1. Device (1) for feeding products (10), comprising a compartment (2) for storing a plurality of products (10), on which compartment one or more products (10) can be removed from a removal region (11), and on the side opposite the removal region (11) a slider (4, 12) pretensioned by a spring rests against one of the products (10), and is moved in the feed direction when a product (10) is removed, wherein a sensor is provided for recording the stock of products, wherein the sensor for recording the stock of products is arranged on the slider (4, 12) and is movable therewith and a motion sensor (36) is arranged on the slider (4, 12), by means of which a movement of the slider (4, 12) can be detected in order to carry out at least one measurement for recording the stock of products when the slider (4, 12) moves, wherein a circuit board (30, 56, 64) is provided on the slider (12, 12'), which circuit board comprises the motion sensor (36) and the sensor for recording the stock of products, **characterized in that** evaluation electronics (31) are provided on the circuit board (30, 56, 64) which are connected to the sensor for recording the stock or products, and that the sensor for recording the stock of products comprises an optical sensor (33) which can emit electromagnetic waves and detect a reflection, wherein the optical sensor emits a wave beam (13) which is reflected by a rear wall (14) or another component, and that the optical sensor carries out a distance measurement, wherein the detection of a position of the slider (4, 12) relative to a fixed point, for example the rear wall (14), is carried out by measuring the time until the reflected beam (13) arrives again at the optical sensor (33), and the length of the products (10) arranged one behind the other between the removal region (11) and the slider (4, 12) is calculated and, depending on the thickness of the products, the number of products still in the compartment also is determined.

2. Device according to claim 1, **characterized in that** the detection of a position of the slider (4, 12) is carried out relative to the rear wall.

3. Device according to claim 1 or 2, **characterized in that** the circuit board (30, 56, 64) is arranged on or in a holder (55) or housing (20, 21; 20', 21', 60) which is detachably fixed to the slider (4).

4. Device according to one of the preceding claims, **characterized in that** a communication unit is provided on the slider (12, 12'), by means of which the measurement data can be transmitted to a control unit.

5. Device according to one of the preceding claims, **characterized in that** an input unit (34) is provided in order to assign the slider (12, 12') and the sensor for recording the stock of products to a specific compartment (2), and an identification of the removed products (10) is possible by means of an identification of the slider (12, 12').

6. Device according to one of the preceding claims, **characterized in that** a temperature sensor is provided which transmits the temperature at the device to the evaluation electronics (31) and/or a control unit.

7. Device according to one of the preceding claims, **characterized in that** the slider (4, 12, 12') is designed as a feed device for feeding the products (10) to the removal region (11).

8. Device according to one of the preceding claims, **characterized in that** a power supply (37) is provided at or in the slider (12').

9. Method for recording a stock of products at a compartment (2) having a plurality of products (10) according to the device of claim 1, comprising the following steps:
- withdrawal of products (10) from a removal region (11);
- shifting the other products (10) remaining in the compartment (2);
- detecting the sliding movement by means of a slider (4, 12, 12') pretensioned by a spring and having a motion sensor (36) arranged at the slider (4, 12);
- triggering, by the signal of the motion sensor (36) after movement of the slider, of a measurement of a sensor arranged on the slider (4, 12) and movable therewith, which sensor comprises an optical sensor (33) which sends out a wave beam (13) which is reflected by a rear wall (14) or another component, for recording the stock of products;
- wherein the detection of a position of the slider (4, 12) relative to a fixed point, for example a rear wall, is carried out by measuring the time until the reflected beam (13) arrives again at the optical sensor (33), and the length of the products arranged one behind the other between the removal region and the slider is calculated and, depending on the thickness of the products, the number of products still in the compartment also is determined.

10. Method according to claim 9, **characterized in that** the measurement for recording the stock of products takes place after a movement of the slider (4, 12, 12') when said slider stands still again.

## Revendications

1. Dispositif (1) pour faire avancer des marchandises (10), avec un compartiment (2) pour stocker plusieurs marchandises (10), sur lequel une ou plusieurs marchandises (10) peuvent être prélevées au niveau d'une zone de prélèvement (11), et sur le côté opposé à la zone de prélèvement (11), un poussoir précontraint par ressort (4, 12) s'applique contre l'une des marchandises (10) et est déplacé dans la direction d'avance lors du prélèvement d'une marchandise (10), un capteur étant prévu pour détecter le stock de marchandises, le capteur de détection du stock de marchandises étant disposé sur le poussoir (4, 12) et mobile avec celui-ci et un capteur de mouvement (36) étant disposé sur le poussoir (4, 12), au moyen duquel un mouvement du poussoir (4, 12) peut être détecté, afin d'effectuer au moins une mesure pour détecter le stock de marchandises lors d'un mouvement du poussoir (4, 12), une platine (30, 56, 64) étant prévue sur le poussoir (12, 12'), laquelle comprend le capteur de mouvement (36) et le capteur de détection du stock de marchandises, **caractérisé en ce qu'**il est prévu sur la platine (30, 56, 64) une électronique d'évaluation (31) qui est reliée au capteur de détection du stock de marchandises, et **en ce que** le capteur de détection du stock de marchandises comprend un capteur optique (33) qui peut émettre des ondes électromagnétiques et détecter une réflexion, le capteur optique émettant un faisceau d'ondes (13) qui est réfléchi par une paroi arrière (14) ou un autre élément, et **en ce que** le capteur optique effectue une mesure de distance, dans lequel la détection d'une position du poussoir (4, 12) par rapport à un point fixe, par exemple la paroi arrière (14), est effectuée en mesurant le temps jusqu'à ce que le faisceau réfléchi (13) atteigne à nouveau le capteur optique (33), et la longueur des marchandises (10) disposées les unes derrière les autres entre la zone de prélèvement (11) et le poussoir (4, 12) est calculée, et en fonction de l'épaisseur de la marchandise, le nombre de marchandises se trouvant encore dans le compartiment (2) est également déterminé.

2. Dispositif selon la revendication 1, **caractérisé en ce que** la détection d'une position du poussoir (4, 12) est effectuée par rapport à la paroi arrière.

3. Dispositif selon la revendication 1 ou 2, **caractérisé en ce que** la platine (30, 56, 64) est disposée sur ou dans un support (55) ou un boîtier (20, 21 ; 20', 21', 60) qui est fixé de manière amovible sur le poussoir (4).

4. Dispositif selon l'une des revendications précédentes, **caractérisé en ce qu'**une unité de communication est prévue sur le poussoir (12, 12'), au moyen de laquelle les données de mesure peuvent être transmises à une unité de commande.

5. Dispositif selon l'une des revendications précédentes, **caractérisé en ce qu'**une unité d'entrée (34) est prévue pour associer le poussoir (12, 12') et le capteur de détection du stock de marchandises à un compartiment déterminé (2), et une identification des marchandises (10) prélevées est possible au moyen d'une identification du poussoir (12, 12').

6. Dispositif selon l'une des revendications précédentes, **caractérisé en ce qu'**il est prévu un capteur de température qui transmet la température au niveau du dispositif à l'électronique d'évaluation (31) et/ou à une unité de commande.

7. Dispositif selon l'une des revendications précédentes, **caractérisé en ce que** le poussoir (4, 12, 12') est réalisé sous la forme d'un dispositif d'avance pour faire avancer les marchandises (10) vers la zone de prélèvement (11).

8. Dispositif selon l'une des revendications précédentes, **caractérisé en ce qu'**une alimentation électrique (37) est prévue sur ou dans le poussoir (12').

9. Procédé de détection d'un stock de marchandises sur un compartiment (2) avec une pluralité de marchandises (10) selon le dispositif selon la revendication 1, comprenant les étapes suivantes :
- prélèvement d'une marchandise (10) au niveau d'une zone de prélèvement (11) ;
- déplacement des autres marchandises (10) restées dans le compartiment (2) ;
- détection du mouvement de déplacement au moyen d'un poussoir précontraint par ressort (4, 12, 12') avec un capteur de mouvement (36) disposé sur le poussoir (4, 12) ;
- déclenchement, par le signal du capteur de mouvement (36) après détection du mouvement du poussoir, d'une mesure d'un capteur qui est disposé sur le poussoir (4, 12) et est mobile avec celui-ci, qui comprend un capteur optique (33) qui émet un faisceau d'ondes (13) qui est réfléchi par une paroi arrière (14) ou un autre élément, pour détecter le stock de marchandises ;
- dans lequel la détection d'une position du poussoir (4, 12) par rapport à un point fixe, par exemple une paroi arrière, est effectuée en mesurant le temps jusqu'à ce que le faisceau réfléchi (13) atteigne à nouveau le capteur optique (33), et la longueur des marchandises disposées les unes derrière les autres entre la zone de prélèvement et le poussoir est calculée, et en fonction de l'épaisseur de la marchandise, le nombre de marchandises se trouvant encore dans le compartiment est également déterminé.

10. Procédé selon la revendication 9, **caractérisé en ce que** la mesure pour déterminer le stock de marchandises est effectuée après un mouvement du poussoir (4, 12, 12'), lorsque celui-ci est à nouveau immobile.
